Europäisches Patentamt

European Patent Office

Office européen des brevets

(11) Veröffentlichungsnummer: **0 475 546 A1**

(12) **EUROPÄISCHE PATENTANMELDUNG**

(21) Anmeldenummer: **91250215.0**

(22) Anmeldetag: **31.07.91**

(51) Int. Cl.⁵: **G01F 11/28**

(30) Priorität: **14.09.90 DE 4029586**

(43) Veröffentlichungstag der Anmeldung:
**18.03.92 Patentblatt 92/12**

(84) Benannte Vertragsstaaten:
**AT BE CH DE DK ES FR GB GR IT LI LU NL SE**

(71) Anmelder: **EFFEM GmbH**
**Eitzer Landstrasse 215**
**W-2810 Verden/Aller(DE)**

(72) Erfinder: **Hinrichs, Michael**
**26, Rue H. Lavedan**
**F-45000 Orléans(FR)**

(74) Vertreter: **Goddar, Heinz J., Dr. et al**
**FORRESTER & BOEHMERT**
**Franz-Joseph-Strasse 38**
**W-8000 München 40(DE)**

(54) **Behälter zur dosierten Flüssigkeitsabgabe.**

(57) Behälter zur dosierten Flüssigkeitsabgabe mit einer einstückig an eine Vorratskammer angeformten Dosierkammer, die über ein Steigrohr mit der in der mit flexibler Gehäusewandung versehenen Vorratskammer befindlichen Flüssigkeit verbunden ist, wobei die Dosierkammer als Dosierbecher mit deutlich geringerem Durchmesser als die Vorratskammer und der Dosierbecherboden zumindest teilweise als eine um das Steigrohr herum angeordnete Platte ausgebildet ist, wobei unterhalb der Platte eine flüssigkeitsdichte Abdichtung zur Vorratskammer hin vorgesehen ist.

FIG. 1

Die Erfindung betrifft einen Behälter zur dosierten Flüssigkeitsabgabe mit einer einstückig an eine Vorratskammer angeformten Dosierkammer, die über ein Steigrohr mit der in der mit flexibler Gehäusewandung versehenen Vorratskammer befindlichen Flüssigkeit verbunden ist.

Ein Behälter dieser Art ist aus der DE-OS 16 57 199 bekannt. Bei diesem bekannten Behälter wird eine Vorrats- und eine Dosierkammer mit gleichem Durchmesser übereinander ausgebildet, wobei zwischen diesen eine waagerechte Trennwand angeordnet ist. Das Steigrohr wird dann in eine in dieser waagerechten Trennwand vorgesehene Öffnung von oben eingedrückt. In der bekannten Dosierkammer ist eine präzise Ablesung des Füllstandes der in ihr befindlichen Flüssigkeitsmenge nur schwer möglich, bzw. mit verschiedenen Fehlerquellen behaftet, da sich eine annähernd genaue Dosierung praktisch nur dann ergibt, wenn der Behälter lotrecht gehalten oder auf einer horizontal ebenen Fläche abgestellt wird. Darüber hinaus führt der eingeschnürte Hals der Dosierkammer beim Ausschütten der Flüssigkeit zu einer Art Kropfbildung: ein nicht vollständiges Kippen in die nach unten gerichtete Vertikallage birgt daher die Gefahr in sich, daß nicht der volle abgemessene Inhalt ausgegossen wird.

In der DE-OS 38 19 098 ist die Ausbildung einer gattungsgemäßen Dosierkammer als Dosierbecher beschrieben, um ein einfacheres und dennoch genaueres Dosieren sowie ein vollständiges Entleeren der Dosierkammer zu gewährleisten. Aus verschiedenen explizit aufgeführten Gründen wird in der genannten Druckschrift aber deutlich von einer baulichen Zusammenfassung von Dosier- und Vorratskammer abgeraten und dahingegen ein in den Halsabschnitt der Vorratskammer einsetzbarer Dosierbecher vorgeschlagen. Bei dieser Konstruktion kommt es aber zu Dichtigkeitsproblemen an der Übergangsstelle zwischen Dosierbecher und Halsabschnitt der Vorratskammer, wie sie durch Verdunsten der flüchtigen Bestandteile in der in diesen Übergangsbereich eingedrungenen Flüssigkeit und entsprechender Kristallisation der nichtflüchtigen Bestandteile bei zunehmender Benutzungsdauer noch verstärkt wird.

Der Erfindung liegt daher die Aufgabe zugrunde, einen gattungsgemäßen Behälter in herstellungstechnisch einfacher Weise so auszubilden, daß ein einfaches und dennoch genaues Dosieren der Flüssigkeit sowie ein vollständiges Entleeren der Dosierkammer möglich ist, wobei aber die erwähnten Dichtigkeitsprobleme zuverlässig vermieden werden.

Erfindungsgemäß wird diese Aufgabe, ausgehend vom Stand der Technik, wie er aus der DE-OS 16 57 199 bekannt war, dadurch gelöst, daß die Dosierkammer als Dosierbecher mit deutlich geringerem Durchmesser als die Vorratskammer und der Dosierbecherboden zumindest teilweise als eine um das Steigrohr herum angeordnete Platte ausgebildet ist, wobei unterhalb der Platte eine flüssigkeitsdichte Abdichtung zur Vorratskammer hin vorgesehen ist.

Auf diese Weise werden in überraschend einfacher Weise die geschilderten Nachteile der vorbekannten Behälter vermieden und die jeweiligen, sich ergänzenden Vorteile der unterschiedlichen bekannten Konstruktionen miteinander kombiniert. Der mit deutlich geringerem Durchmesser als die Vorratskammer ausgebildete Dosierbecher des erfindungsgemäßen Behälters erlaubt ein schnelles und genaues Dosieren der über das Steigrohr aus der Vorratskammer in den Dosierbecher überführten Flüssigkeit und ein vollständiges Ausgießen derselben, ohne daß der Behälter insgesamt vollständig umgekippt werden muß. Darüber hinaus sind die Dichtigkeitsprobleme, die bei der Vorrichtung nach der DE-OS 38 19 098 unvermeidbar waren, beim erfindungsgemäßen Behälter in überzeugend einfacher Weise beseitigt.

Dabei ist der erfindungsgemäße Behälter fertigungstechnisch besonders einfach, da er weitgehend einstückig hergestellt werden kann und die Einheit aus Dosierbecherbodenplatte und Steigrohr einfach und problemlos von oben in den Behälter einsetzbar ist. Auch hierin besteht ein deutlicher Vorteil zum bekannten Behälter nach der DE-OS 16 57 199, da das Einsetzen des Steigrohrs in die Öffnung der waagerechten Platte zwischen Vorratskammer und Dosierkammer durch den verengten Hals der Vorratskammer hindurch umständlich ist, was dazu führt, daß das Steigrohr oft keinen hinreichend festen und sicheren Sitz hat. Beim Umstülpen des Behälters zum Ausgießen des Inhaltes der Dosierkammer kann es daher häufig vorkommen, daß sich das lockersitzende Steigrohr löst und der gesamte Inhalt der Vorratskammer sich schwallartig entleert. Derartige Probleme treten beim erfindungsgemäßen Behälter durch das einfache Einführen und Befestigen der Dosierbecherbodenplatte mit Steigrohr in den Dosierbecher nicht mehr auf.

In einer besonderen Ausführungsform der Erfindung ist die Platte als im wesentlichen waagerecht verlaufender Ringabschnitt einer Dosiereinheit ausgebildet, in die das Steigrohr von unten einschiebbar ist. Hierdurch wird der Zusammenbau des kombinierten Elements aus Dosierbecherbodenplatte und Steigrohr stark vereinfacht, da durch den Abstand zwischen dem Ringabschnitt der Dosiereinheit und dessen oberem Ende die Position der Platte um das Steigrohr herum durch einfaches Einschieben desselben in die Dosiereinheit von unten bis zum Anschlag festgelegt ist.

In jedem Fall kann vorgesehen sein, daß die Platte fest mit dem Steigrohr verbunden ist, um ein gegenseitiges Verschieben beider Teile gegeneinander zu verhindern, was auch garantiert, daß für das Einführen des Steigrohrs in die Vorratskammer durch das Aufliegen der Dosierbecherbodenplatte am unteren Ende des Dosierbechers ein Anschlag vorgegeben ist, durch den das exakte Positionieren des Steigrohrs innerhalb der Vorratskammer problemlos möglich ist.

Die Erfindung schlägt weiterhin vor, daß zwischen dem Dosierbecher und der Vorratskammer eine flaschenhalsartige Verengung vorgesehen ist.

Dabei kann die Dosierbecherbodenplatte bevorzugt auf der durch die flaschenhalsartige Verengung am unteren Ende des Dosierbechers entstehenden Stufe aufliegen.

Die flüssigkeitsdichte Abdichtung zur Vorratskammer hin ist dann vorzugsweise im Bereich der flaschenhalsartigen Verengung angeordnet, wobei diese Abdichtung entweder als ein an der Innenseite der flaschenhalsartigen Verengung dicht anliegende Gummimanschette oder als ein an der Innenseite der flaschenhalsartigen Verengung dicht anliegender, mit Rillen versehener Kunststoffring um das Steigrohr herum ausgebildet ist.

Besonders bevorzugt ist dabei eine Ausführungsform der Erfindung, bei der der Kunststoffring einstückig mit der Platte ausgebildet ist. Im Fall der Konstruktion der Platte als im wesentlichen waagerecht verlaufender Ringabschnitt einer Dosiereinheit kann somit die gesamte Dosiereinheit einschließlich Dosierbecherbodenplatte und Abdichtungsring als ein einheitliches Kunststoffteil ausgebildet werden, in das dann von unten das Steigrohr einschiebbar ist.

Bei der beschriebenen Konstruktion mit einer flaschenhalsartigen Verengung zwischen Dosierbecher und Vorratskammer, einer oberhalb daran angeordneten Dosierbecherbodenplatte und einer in der flaschenhalsartigen Verengung vorgesehenen Abdichtung, ist die Ausgestaltung des Dosierbecherbodens und des Übergangs zur Vorratskammer sowie die Frage der Abdichtung zwischen Dosierbecher und Vorratskammer in besonders einfacher und effektiver Weise gelöst. In der bevorzugten Ausführungsform der Erfindung kann dann das zusammengebaute Element aus Steigrohr und Dosiereinheit, einschließlich Dosierbecherbodenplatte und Abdichtung, Gummimanschette besonders einfach von oben her durch den Dosierbecher eingeschoben und in der flaschenhalsartigen Verengung zwischen Dosierbecher und Vorratskammer zuverlässig gesichert werden.

In einer weiteren Ausführungsform der Erfindung ist schließlich noch vorgesehen, daß unterhalb der flaschenhalsartigen Verengung ein Außengewinde für die Schraubbefestigung einer den Dosierbecher übergreifenden Verschlußkappe vorgesehen ist. Auf diese Weise ist ein Schutz des empfindlicheren oberen Teils des erfindungsgemäßen Behälters in Form des Dosierbechers und des daran angeordneten Steigrohres gegen Transportschäden gewährleistet.

Weitere Merkmale und Vorteile der Erfindung ergeben sich aus der nachfolgenden detailierten Beschreibung eines Ausführungsbeispieles der vorliegenden Erfindung, das anhand der beiliegenden Zeichnungen erläutert ist. Dabei zeigt:

Fig. 1 eine Seitenansicht einer besonders bevorzugten Ausführungsform, des erfindungsgemäßen Behälters; und

Fig. 2 eine vergrößerte Querschnittsdarstellung des oberen Bereichs des Behälters von Fig. 1; und

Fig. 3 eine vergrößerte Querschnittsdarstellung des oberen Bereichs des Behälters von Fig. 1 bei einer weiteren Ausführungsform der Erfindung.

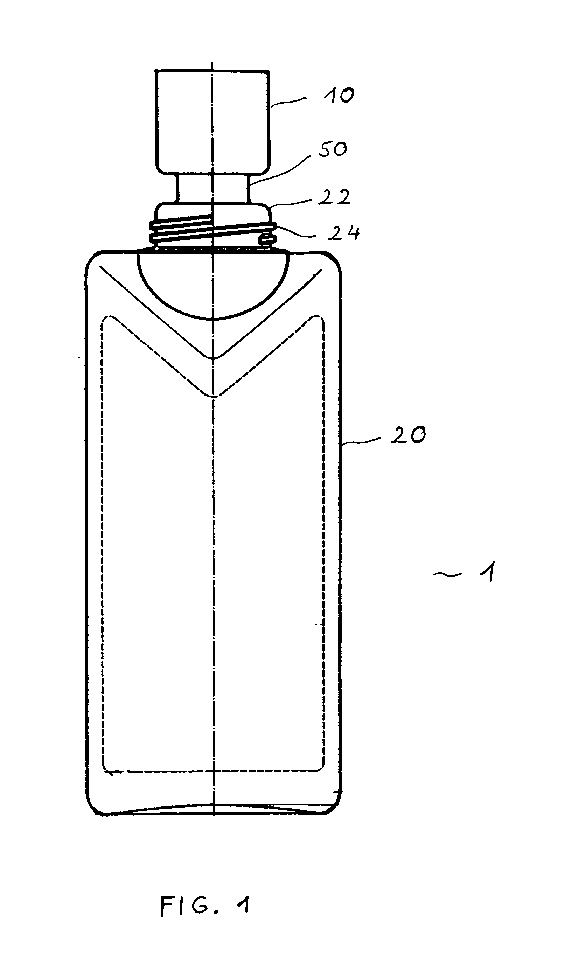

Fig. 1 stellt einen erfindungsgemäßen Behälter 1 zur dosierten Flüssigkeitsabgabe von bspw. Flüssigdünger dar. Dabei ist der größere untere Teil des Behälters als Vorratskammer 20 mit flexibler Gehäusewandung ausgebildet, um durch Druck auf diese Wandung die in der Vorratskammer 20 befindliche Flüssigkeit dazu zu veranlassen, in dem (in dieser Darstellung nicht gezeigten) Steigrohr in den einstückig an die Vorratskammer angeformten Dosierbecher 10 überzutreten, der einen deutlich geringeren Durchmesser als die Vorratskammer 20 aufweist. Der Dosierbecher 10 und die Vorratskammer 20 sind durch einen Halsabschnitt miteinander Verbunden, der aus einer unterhalb des Dosierbechers angeordneten flaschenhalsartigen Verengung 50 und einem darunter befindlichen Halsabschnitt 22 mit etwa dem gleichen Durchmesser wie der Dosierbecher 10 besteht, wobei letzterer mit einem Außengewinde 24 für die Schraubbefestigung einer den Dosierbecher übergreifenden Verschlußkappe versehen ist.

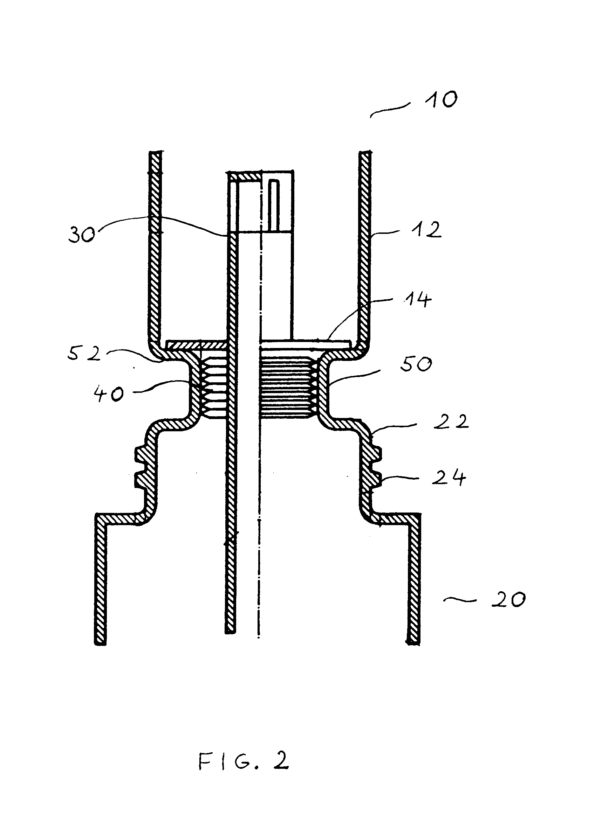

In der Detaildarstellung von Fig. 2 ist deutlich zu erkennen, daß Dosierbecher 10, flaschenhalsartige Verengung 50, Halsabschnitt 22 mit Außengewinde 24 sowie Vorratskammer 20 einstückig ausgebildet sind. Durch die flaschenhalsartige Verengung 50 im Anschluß an die Gehäusewandung 12 des Dosierbechers 10 ergibt sich eine Stufe 52, auf der die Dosierbecherbodenplatte 14 aufliegt, die im wesentlichen den gleichen Durchmesser aufweist wie der Dosierbecher 10 selbst. Direkt unterhalb der Dosierbecherbodenplatte 14, die um das Steigrohr 30 herum angeordnet und im gezeigten Beispiel fest mit diesem verbunden ist, ist eine Gummimanschette 40 angeordnet, die als Abdichtung zwischen der Vorratskammer und dem Dosierbecher 10 dient. Beim Einschieben der getrennten Baugruppe

Steigrohr/Dosierbecherbodenplatte/Gummimanschette in den erfindungsgemäßen Behälter 1 erfüllt
dabei die Dosierbecherbodenplatte 14 die Funktion
eines oberen Anschlags für die Gummimanschette
40, wodurch eine zuverlässige Abdichtung der flaschenhalsartigen Verengung 50 erreicht wird.

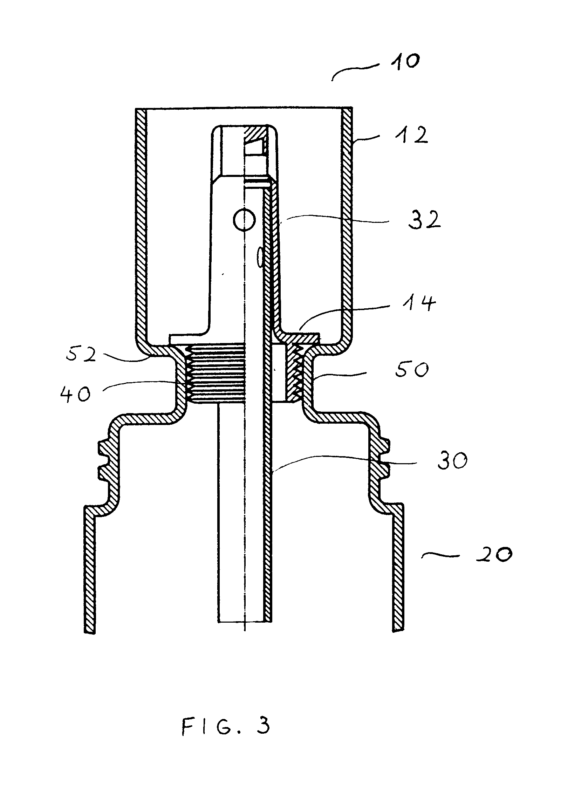

Fig. 3 zeigt eine weitere Ausführungsform der
Erfindung. Dabei ist die Platte 14 als Ringabschnitt
einer Dosiereinheit 32 ausgebildet. Die Abdichtung
40 besitzt dabei die Form eines mit Rillen versenen Kunststoffrings, der einstückig mit der Platte
14 und damit mit der gesamten Dosiereinheit ausgebildet ist. Insgesamt ergibt sich hierbei also eine
Dosierer/Dosierbecherbodenplatte/Abdichtung/Steigrohr, bei der die ersten drei der genannten Bestandteile insgesamt einstückig aus dem selben
Material gefertigt, und das Steigrohr 30 in der
bereits geschilderten Weise bis zum Anschlag von
unten eingeschoben ist.

Die in der vorstehenden Beschreibung sowie in
den Ansprüchen und der beiliegenden Zeichnung
offenbarten Merkmale der Erfindung können sowohl einzeln als auch in beliebiger Kombination für
die Verwirklichung der Erfindung in ihren verschiedenen Ausführungsformen wesentlich sein.

Bezugszeichenliste

| 1 | Behälter |
| 10 | Dosierbecher |
| 12 | Umfangswandung von 10 |
| 14 | Platte |
| 20 | Vorratskammer |
| 22 | Halsabschnitt |
| 24 | Außengewinde |
| 30 | Steigrohr |
| 32 | Dosiereinheit |
| 40 | Abdichtung |
| 50 | Flaschenhalsartige Verengung |
| 52 | Stufe |

**Patentansprüche**

1. Behälter zur dosierten Flüssigkeitsabgabe mit
einer einstückig an eine Vorratskammer angeformten Dosierkammer, die über ein Steigrohr
mit der in der mit flexibler Gehäusewandung
versehenen Vorratskammer befindlichen Flüssigkeit verbunden ist, dadurch gekennzeichnet,
daß die Dosierkammer als Dosierbecher (10)
mit deutlich geringerem Durchmesser als die
Vorratskammer (20) und der Dosierbecherboden zumindest teilweise als eine um das Steigrohr (30) herum angeordnete Platte (14) ausgebildet ist, wobei unterhalb der Platte (14) eine
flüssigkeitsdichte Abdichtung (40) zur Vorratskammer (20) hin vorgesehen ist.

2. Behälter nach Anspruch 1, dadurch gekennzeichnet, daß die Platte (14) als im wesentlichen waagerecht verlaufender Ringabschnitt
einer Dosiereinheit (32) ausgebildet ist, in die
das Steigrohr (30) von unten einschiebbar ist.

3. Behälter nach Anspruch 1 oder 2, dadurch
gekennzeichnet, daß die Platte (14) fest mit
dem Steigrohr (30) verbunden ist.

4. Behälter nach einem der Ansprüche 1 bis 3,
dadurch gekennzeichnet, daß zwischen dem
Dosierbecher (10) und der Vorratskammer (20)
eine flaschenhalsartige Verengung (50) vorgesehen ist.

5. Behälter nach Anspruch 4, dadurch gekennzeichnet, daß die Platte (14) auf der durch die
flaschenhalsartige Verengung (50) am unteren
Ende des Dosierbechers (10) einstehende Stufe aufliegt.

6. Behälter nach einem der Ansprüche 4 oder 5,
dadurch gekennzeichnet, daß die flüssigkeitsdichte Abdichtung (40) zur Vorratskammer (20)
hin im Bereich der flaschenhalsartigen Verengung (50) angeordnet ist.

7. Behälter nach Anspruch 6, dadurch gekennzeichnet, daß die Abdichtung (40) als eine an
der Innenseite der flaschenhalsartigen Verengung (50) dicht anliegende Gummimanschette
um das Steigrohr (30) herum ausgebildet ist.

8. Behälter nach Anspruch 6, dadurch gekennzeichnet, daß die Abdichtung (40) als ein an
der Innenseite der flaschenhalsartigen Verengung (50) dicht anliegender, mit Rillen versehener Kunststoffring um das Steigrohr (30) herum ausgebildet ist.

9. Behälter nach Anspruch 8, dadurch gekennzeichnet, daß der Kunststoffring (40) einstückig
mit der Platte (14) ausgebildet ist.

10. Behälter nach einem der vorangehenden Ansprüche, dadurch gekennzeichnet, daß unterhalb der flaschenhalsartigen Verengung (50)
ein Außengewinde (24) für die Schraubbefestigung einer den Dosierbecher übergreifenden
Verschlußkappe vorgesehen ist.

FIG. 1

10

30

12

14

52

50

40

22

24

20

FIG. 2

F I G. 3

**Europäisches Patentamt**

# EUROPÄISCHER RECHERCHENBERICHT

Nummer der Anmeldung

**EP 91 25 0215**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-3 581 953  (R.J. DONOGHUE)<br>* Spalte 1, Zeile 70 - Spalte 3, Zeile 33; Abbildungen 1-9 * * <br>– – – | 1-10 | G 01 F 11/28 |
| X | FR-A-2 637 366  (KERPLAS)<br>* Seite 4, Zeile 15 - Seite 5, Zeile 26; Abbildung 1 * *<br>– – – | 1-7,9 | |
| D,A | DE-A-1 657 199  (R.J. DONOGHUE)<br>* Seite 3, Absatz 2 - Seite 8, Absatz 2; Abbildungen 1-12 * *<br>– – – | 1-10 | |
| D,A | DE-A-3 819 098  (R. FINKE)<br>* Spalte 6, Zeile 65 - Spalte 9, Zeile 26; Abbildungen 1-4 * *<br>– – – – – | 1-10 | |

| | RECHERCHIERTE SACHGEBIETE (Int. Cl.5) |
|---|---|
| | G 01 F |

Der vorliegende Recherchenbericht wurde für alle Patentansprüche erstellt

| Recherchenort | Abschlußdatum der Recherche | Prüfer |
|---|---|---|
| Den Haag | 14 November 91 | HEINSIUS R. |

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument
-------------------------------------------------------------
& : Mitglied der gleichen Patentfamilie, übereinstimmendes Dokument